# DEMANDE DE BREVET EUROPEEN

(11) **EP 1 236 611 A1**
(43) Date de publication de la demande: **04.09.2002**
(21) Numéro de dépôt: 02290424.7
(22) Date de dépôt: 21.02.2002
(51) Int. Cl.: B60P 1/26, B62D 33/03

(54) **Benne comportant une articulation perfectionnée d'une ridelle par rapport au fond de benne**

(30) Priorité: 28.02.2001 FR 0102733
(71) Demandeur: Marrel, 42160 Andrézieux-Bouthéon (FR)
(72) Inventeur: Chabanas, Noel, 42500 Le Chambon Feugerolles (FR); Chevalier, Jean-Louis, 42340 Veauche (FR)
(74) Mandataire: Rinuy, Santarelli

(57) **Abrégé**

Benne comportant un fond (3) et au moins une ridelle (4) s'étendant le long d'un bord (5) dudit fond (3), et articulée par rapport audit fond (3) autour d'un axe parallèle audit bord (5).

Selon l'invention, l'axe d'articulation (A) de ladite ridelle (4) est écarté dudit bord (5) vers l'extérieur, et ladite ridelle (4) présente en bout une portion cylindrique (22) adaptée à coopérer, sur au moins une partie de son débattement angulaire, avec ledit bord (5).

## Description

L'invention a trait aux bennes.

Les bennes, employées le plus souvent pour le transport ou le stockage de marchandises ou de matériaux, sont généralement bordées par des cloisons qui, lorsqu'elles sont articulées, sont appelées ridelles. Les ridelles peuvent être articulées par le haut, ou par le bas. Elles permettent de faciliter le chargement ou le déchargement de la benne, celle-ci pouvant être fixe ou basculante. On trouve généralement des ridelles articulées par le haut à l'arrière des bennes basculantes de véhicule, en vue de faciliter le déchargement. Les ridelles articulées par le bas forment généralement les parois latérales de la benne, et visent à faciliter à la fois le chargement et le déchargement de la benne par le côté.

L'invention concerne une benne comportant un fond et au moins une ridelle s'étendant le long d'un bord dudit fond et articulée par rapport audit fond autour d'un axe parallèle audit bord.

Une benne de ce type est connue du document EP-A-0 623 502, au nom de la demanderesse.

On connaît aussi des bennes dont le bord du fond présente une arête vive avec laquelle la ridelle est en contact et contre laquelle elle frotte lors de son ouverture et de sa fermeture.

Dans d'autres bennes, le bord et la ridelle présentent des surfaces cylindriques complémentaires.

Dans ces types de bennes, la ridelle a tendance, lors de son ouverture et de sa fermeture, à racler contre le bord du fond de benne, ce qui a tendance à les endommager tous les deux, surtout lorsque le bord présente une arête vive. Il peut également se produire un grippage qui nuit au mouvement de la ridelle, notamment lorsque le bord du fond de benne et la ridelle présentent des surfaces cylindriques complémentaires, des impuretés ayant tendance à s'insinuer entre le bord du fond de benne et la ridelle, impuretés dont il est difficile de se débarrasser sans démonter la ridelle.

De plus, compte tenu du montage de la ridelle, le bord du fond de benne est visible de l'extérieur de la benne, tant en position fermée qu'en position ouverte de la ridelle. Il en résulte que la benne n'offre pas un aspect visuel parfaitement propre.

En outre, certains matériaux, notamment les matériaux pulvérulents, qui ont tendance à s'insinuer dans les interstices existant généralement entre la ridelle et le bord du fond de benne, peuvent être projetés vers l'extérieur lors du transport, ce qui peut être dangereux pour des personnes se trouvant au voisinage de la benne.

Ces bennes, qui peuvent donner satisfaction, présentent donc un certain nombre d'inconvénients auxquels l'on souhaite remédier, en proposant une benne présentant un aspect visuel durablement propre, notamment au niveau de la jonction entre la ridelle et le fond de benne, qui évite les projections de matériaux vers l'extérieur et dont le fonctionnement soit parfaitement fiable, et évite tout grippage.

A cet effet, l'invention propose une benne comportant un fond et au moins une ridelle s'étendant le long d'un bord dudit fond, et articulée par rapport audit fond autour d'un axe parallèle audit bord, où l'axe d'articulation de ladite ridelle est écarté dudit bord vers l'extérieur, et où ladite ridelle présente en bout une portion cylindrique adaptée à coopérer, sur au moins une partie de son débattement angulaire, avec ledit bord.

En masquant la partie de contact entre le fond de benne et la ridelle, cette dernière préserve l'aspect visuel de la benne.

Par ailleurs, la portion cylindrique de la ridelle forme un obstacle aux projections de matériaux lors d'un éventuel transport de la benne.

Selon un mode de réalisation préféré, la portion cylindrique présente une section transversale qui appartient à un cercle centré sur l'axe d'articulation, et tangent audit bord.

La benne peut présenter les caractéristiques avantageuses mais non limitatives suivantes :
- ladite portion cylindrique présente, autour de l'axe, une ouverture angulaire comprise entre 90° et 180° ;
- ladite portion cylindrique appartient à un profilé bordant ladite ridelle ;
- ledit profilé forme une armature de renfort de ladite ridelle ;
- ladite ridelle comporte une pièce tubulaire assujettie à une extrémité libre dudit profilé.

Par ailleurs, le bord de la benne est par exemple formé par un rebord présentant une surface au droit de laquelle se trouve l'axe d'articulation, et avec laquelle est adaptée à coopérer ladite portion cylindrique.

Selon d'autres caractéristiques avantageuses mais non limitatives :
- ladite surface est plane ;
- ladite surface est inclinée par rapport à la normale audit fond ;
- ledit rebord est formé par un profilé formant un renfort dudit fond de benne.

En outre, l'articulation de la ridelle peut être réalisée au moyen d'au moins une charnière comportant une patte solidaire dudit fond et saillant de celui-ci, ainsi qu'une chape prévue sur ladite ridelle et formée par une échancrure pratiquée dans ladite portion cylindrique, bordée par deux plaques en regard et solidaires de ladite portion cylindrique, ladite patte étant insérée dans ladite échancrure entre les plaques, ladite patte et lesdites plaques étant réunies par une tige formant l'axe d'articulation de la ridelle.

D'autres objets et avantages de l'invention apparaîtront à la lumière de la description qui va suivre de modes de réalisation de l'invention, fournis à titre d'exemples non limitatifs, description faite en référence aux dessins annexés dans lesquels :
- la figure 1 est une vue d'élévation en plan d'un véhicule, en l'occurrence un camion, portant une benne selon l'invention ;
- la figure 2 est une vue de détail en coupe d'élévation transversale suivant la ligne II-II de la figure 1, en position fermée de la ridelle, celle-ci formant un angle droit avec le fond de benne ;
- la figure 3 est une vue similaire à la figure 2, dans laquelle la ridelle se trouve dans une position ouverte en formant avec le fond de benne un angle plat;
- la figure 4 est une vue similaire aux figures 2 et 3, dans laquelle la ridelle se trouve dans une position ouverte et pend librement du fond de benne ;
- les figures 5, 6 et 7 sont des vues agrandies suivant les détails respectifs V, VI, VII des figures 2, 3 et 4 ;
- la figure 8 est une vue de détail en perspective éclatée illustrant le montage de la ridelle sur le fond de benne.

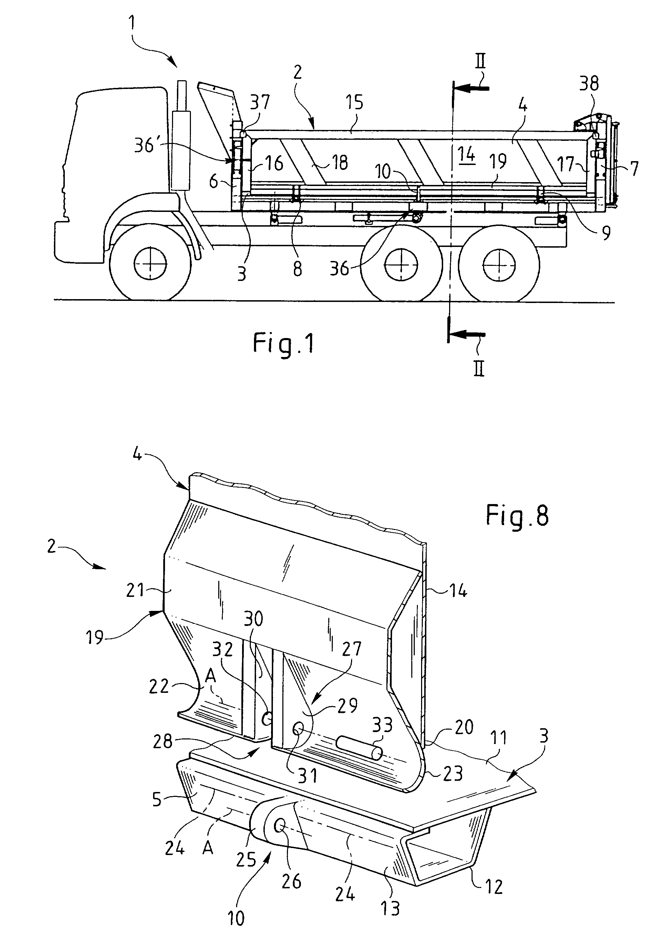

Sur la figure 1 est représenté un véhicule 1 portant une benne 2 comportant un fond 3 bordé latéralement par deux ridelles 4 dont une seule est visible sur la figure 1.

Le fond 3 présente un bord 5 latéral rectiligne, ou sensiblement rectiligne, le long duquel s'étend la ridelle 4 sur toute la longueur de la benne 2, entre un poteau avant 6 et un poteau arrière 7.

Bien entendu, il est possible de prévoir plusieurs ridelles disposées bout à bout, et par exemple séparées par des poteaux intermédiaires.

La ridelle 4 est articulée par le bas par rapport au fond 3, autour d'un axe A parallèle, ou sensiblement parallèle, au bord 5 grâce à des charnières, en l'occurrence des charnières avant 8 et arrière 9, et une charnière centrale 10.

Le fond de benne 3 comporte un plancher 11 sensiblement plat, ainsi qu'une traverse 12 étendue sur toute la longueur de la benne 2, formant un rebord du fond de benne 3, disposée sous le plancher 11 et assujettie à celui-ci.

Le rebord 12 se présente sous la forme d'un profilé métallique à section transversale en forme de trapèze dont la petite base est tournée vers le bas, et qui forme un renfort du fond de benne 3.

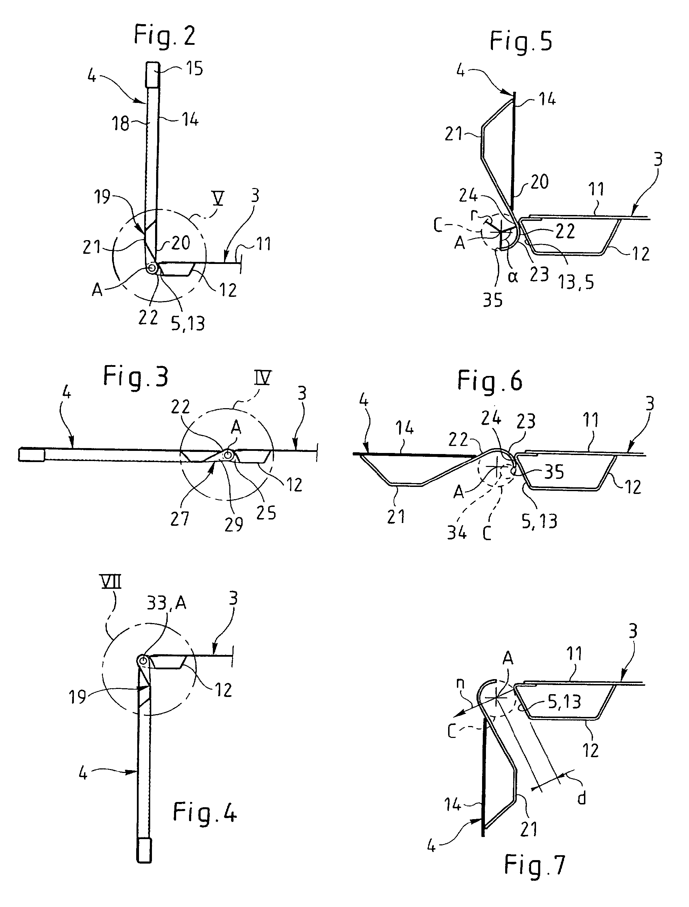

Le rebord 12 présente une surface 13, dite extérieure, plane ou sensiblement plane, qui est inclinée par rapport à la normale au plancher 11, tel qu'il apparaît sur les figures 2 à 7.

La ridelle 4 est apte à pivoter par rapport au fond de benne 3 entre une position dite fermée dans laquelle elle forme un angle droit ou sensiblement droit avec le fond de benne 3 et entrave l'accès à l'intérieur de la benne 2 (figures 2 et 5), et une position dite ouverte dans laquelle elle pend librement du fond de benne 3 et permet ainsi l'accès à l'intérieur de la benne 2 (figures 4 et 7). Une position intermédiaire, dans laquelle la ridelle 4 est située dans le prolongement du fond de benne 3, est illustrée sur les figures 3 et 6.

L'on décrit à présent la ridelle 4, supposée fixe en position fermée pour plus de commodité.

La ridelle 4 comporte une paroi 14 sensiblement plane formée par une plaque métallique, bordée vers le haut par une traverse 15, dite supérieure, vers l'avant par un montant avant 16, vers l'arrière par un montant arrière 17. La ridelle 4 peut être renforcée par une série de longerons 18 parallèles disposés en oblique.

La ridelle 4 est bordée vers le bas par une traverse 19, dite inférieure, formée par un profilé métallique assujetti à la paroi 14 le long d'un bord inférieur 20 de celle-ci.

Cette traverse inférieure 19 présente une portion supérieure 21, située au droit de la paroi 14 et présentant une section transversale en forme de U ou en forme de trapèze, prolongée par une portion inférieure 22 dépassant de la paroi 14 et recourbée vers l'extérieur.

L'axe d'articulation A de la ridelle 4 est écarté du bord 5 du fond de benne 3 vers l'extérieur, en étant situé au droit de la surface extérieure 13 du rebord 12. L'on note d la distance de l'axe d'articulation A à la surface extérieure 13 du rebord 12, mesurée suivant la normale n à cette surface 13, passant par l'axe d'articulation A.

La portion inférieure 22 de la traverse inférieure 19 est cylindrique. Elle est adaptée à coopérer sur au moins une partie du débattement angulaire de la ridelle 4, avec la surface extérieure 13 du rebord 12.

En section transversale, la portion inférieure cylindrique 22 appartient à un cercle C centré sur l'axe d'articulation A, et qui présente un rayon r égal à la distance d, de sorte que ce cercle C est tangent à la surface extérieure 13 du rebord 12.

Par ailleurs, la portion cylindrique 22 s'étend angulairement, autour de l'axe d'articulation A, selon une ouverture angulaire α comprise de préférence entre 90° et 180°. Selon un mode de réalisation illustré sur les figures 5 à 7, cette ouverture angulaire α est sensiblement égale à 120°.

La portion cylindrique 22 suit le cercle C lors du pivotement de la ridelle 4, de sorte que, quelle que soit la position angulaire de la ridelle 4 entre la position fermée et une position écartée, dite position limite de contact, dans laquelle la ridelle 4 forme avec le fond de benne 3 un angle égal à l'ouverture angulaire α, sa portion cylindrique 22 se trouve, par l'intermédiaire d'une face 23 au contact de la surface extérieure 13 du rebord 12 le long d'une ligne fixe 24 de contact parallèle à l'axe d'articulation A.

Par conséquent, le frottement subi par le fond de benne 3 est localisé le long de cette ligne fixe de contact 24. La face 23 de la portion cylindrique 22 qui frotte contre le fond de benne 3 est quant à elle tournée vers l'intérieur de la benne 2 en position fermée de la ridelle 4. Cette face 23 est donc soustraite à la vue depuis l'extérieur.

L'absence d'arête vive, qui résulte de la réalisation cylindrique de la portion 22 et de la réalisation plane de la surface 13, évite que la ridelle 4 ne racle le rebord 12, et inversement. Il en découle une certaine douceur de fonctionnement lors de l'ouverture et de la fermeture de la ridelle 4.

Au delà de la position limite de contact, la portion cylindrique 22 quitte la surface extérieure 13, de sorte qu'un interstice apparaît entre la ridelle 4 et le fond de benne 3, cet interstice permettant l'écoulement des matériaux initialement prisonniers entre la traverse inférieure 21 et le rebord 12.

L'on décrit à présent l'une des charnières, en l'occurrence la charnière centrale 10 permettant l'articulation de la ridelle 4 au fond de benne 3, en référence aux figures 2 à 4, et à la figure 8.

La charnière 10 comporte d'une part une patte 25 solidaire du fond de benne 3 et saillant de celui-ci vers l'extérieur, au droit de la surface extérieure 13 du rebord 12.

Dans cette patte 25 est pratiqué un trou traversant 26 à section circulaire, centré sur l'axe d'articulation A de la ridelle 4.

La charnière 10 comporte d'autre part une chape 27 prévue sur la ridelle 4, et formée par une échancrure 28 pratiquée dans la portion cylindrique 22 à hauteur de l'axe d'articulation A, et par deux plaques en regard 29, 30 solidaires de la portion cylindrique 22 et encadrant l'échancrure 28. Les plaques 29, 30 sont par exemple soudées à la traverse inférieure 19, et dans chacune d'elles est pratiqué un trou traversant 31, 32 à section circulaire centré sur l'axe d'articulation A de la ridelle 4.

La patte 25 est insérée dans l'échancrure 28 entre les plaques 29, 30, la patte 25 et les plaques 29, 30 étant réunies par une tige 33 cylindrique traversant les trous 26, 31, 32 et formant l'axe d'articulation A de la ridelle 4.

L'ouverture et la fermeture de la ridelle 4 peuvent être commandées de manière mécanique au moyen d'un dispositif d'ouverture 36 hydraulique fixé par exemple sous le fond de benne 3. Par ailleurs, la ridelle 4 peut être maintenue en position fermée par un dispositif de verrouillage 36' hydraulique fixé par exemple à l'un des poteaux 6, 7 de la benne 2. Pour la réalisation de tels dispositifs, on pourra se référer notamment au document EP-A-0 623 502.

Le verrouillage de la ridelle 4 en position fermée peut être complété au moyen de cales 37, 38 associées aux montants avant et arrière 16,17.

Par ailleurs, afin de garantir la sécurité des usagers de la benne 2, il est possible de prévoir une pièce tubulaire 34 (représentée en traits interrompus sur la figure 6) étendue parallèlement à l'axe d'articulation A de la ridelle 4, et assujettie à une extrémité libre 35 de la portion cylindrique 22, qui pourrait s'avérer coupante.

En outre, sans sortir du cadre de l'invention, la portion cylindrique peut s'étendre suivant une ouverture angulaire supérieure à 120°. Par exemple, cette portion cylindrique est recourbée vers et jusqu'à la portion supérieure du profilé formant la traverse inférieure.

## Revendications

1. Benne comportant un fond (3) et au moins une ridelle (4) s'étendant le long d'un bord (5) dudit fond (3), et articulée par rapport audit fond (3) autour d'un axe parallèle audit bord (5), **caractérisée en ce que** l'axe d'articulation (A) de ladite ridelle (4) est écarté dudit bord (5) vers l'extérieur, et **en ce que** ladite ridelle (4) présente en bout une portion cylindrique (22) adaptée à coopérer, sur au moins une partie de son débattement angulaire, avec ledit bord (5).

2. Benne selon la revendication 1, **caractérisée en ce que** ladite portion cylindrique (22) présente une section transversale qui appartient à un cercle (C) centré sur l'axe d'articulation (A), et tangent audit bord (5).

3. Benne selon la revendication 2, **caractérisée en ce que** ladite portion cylindrique (22) présente, autour de l'axe (A), une ouverture angulaire (α) comprise entre 90° et 180°.

4. Benne selon l'une des revendications 1 à 3, **caractérisée en ce que** ladite portion cylindrique (22) appartient à un profilé (19) bordant ladite ridelle (4).

5. Benne selon la revendication 4, **caractérisée en ce que** ledit profilé (19) forme une armature de renfort de ladite ridelle (4).

6. Benne selon la revendication 4 ou 5, **caractérisée en ce que** ladite ridelle (4) comporte une pièce tubulaire assujettie à une extrémité libre (35) dudit profilé (19).

7. Benne selon l'une des revendications 1 à 6, **caractérisée en ce que** ledit bord (5) est formé par un rebord (12) présentant une surface (13) au droit de laquelle se trouve l'axe d'articulation (A), et avec laquelle est adaptée à coopérer ladite portion cylindrique (22).

8. Benne selon la revendication 7, **caractérisée en ce que** ladite surface (13) est plane.

9. Benne selon la revendication 8, **caractérisée en ce que** ladite surface (13) est inclinée par rapport à la normale audit fond (3).

10. Benne selon l'une des revendications 7 à 9, **caractérisée en ce que** ledit rebord (12) est formé par un profilé formant un renfort dudit fond de benne (3).

11. Benne selon l'une des revendications 1 à 10, **caractérisée en ce que** l'articulation de la ridelle (4) est réalisée au moyen d'au moins une charnière (8, 9, 10) comportant une patte (25) solidaire dudit fond (3) et saillant de celui-ci, ainsi qu'une chape (27) prévue sur ladite ridelle (4) et formée par une échancrure (28) pratiquée dans ladite portion cylindrique (22), bordée par deux plaques (29, 30) en regard et solidaires de ladite portion cylindrique (22), ladite patte (25) étant insérée dans ladite échancrure (28) entre les plaques (29, 30), ladite patte (25) et lesdites plaques (29, 30) étant réunies par une tige (33) formant l'axe d'articulation (A) de la ridelle (4).
